# EUROPEAN PATENT APPLICATION

(11) **EP 4 651 016 A1**
(43) Date of publication of application: **19.11.2025**
(21) Application number: 24773979.0
(22) Date of filing: 13.03.2024
(51) Int. Cl.: G06F 40/58

(54) **TRANSLATION METHOD, ELECTRONIC DEVICE, AND COMPUTER STORAGE MEDIUM**

(30) Priority: 21.03.2023 CN 202310280352
(71) Applicant: Huawei Technologies Co., Ltd., Shenzhen, Guangdong 518129 (CN)
(72) Inventor: DING, Jianbang, Shenzhen, Guangdong 518129 (CN); ZHANG, Suiyun, Shenzhen, Guangdong 518129 (CN)
(74) Representative: Gill Jennings & Every LLP
(86) International application number: PCT/CN2024/081421
(87) International publication number: WO 2024/193413

(57) **Abstract**

This application provides a translation method, an electronic device, and a computer storage medium. The method includes: receiving a first input operation of a user; displaying first text and second text in response to the first input operation, where the first text is in a first language, the second text is in a second language, and the first language is different from the second language; receiving a first translation request of the user; and displaying a first interface, where the first interface includes third text and fourth text, the third text and the fourth text are in a third language, the third language is different from the first language, the third text is obtained by translating the first text, the fourth text corresponds to the second text, and a display manner of the third text is different from a display manner of the fourth text. In this application, translation results of content in different languages can be displayed in different display manners, to implement a search-free function in a "language dimension", thereby improving user experience.

## Description

This application claims priority to Chinese Patent Application No. 202310280352.6, filed with the China National Intellectual Property Administration on March 21, 2023, and entitled "TRANSLATION METHOD, ELECTRONIC DEVICE, AND COMPUTER STORAGE MEDIUM", which is incorporated herein by reference in its entirety.

### TECHNICAL FIELD

This application relates to the field of computer technologies, and in particular, to a translation method, an electronic device, and a computer storage medium.

### BACKGROUND

A terminal such as a mobile phone or a tablet may provide a translation function, that is, translate text (which may be referred to as source text) input or selected by a user into text in a target language and return the text to the user. However, this translation function is only applicable to a case in which the source text is in a single language. When the source text is in mixed languages, problems such as mistranslation and omission often occur. For example, when the source text is in mixed languages of English and German, the terminal may translate only English content into Chinese content, and does not translate German content, that is, omission exists. Alternatively, the terminal recognizes German content as English content, and translates the German content in a manner of translating the English content, which leads to incorrect translation of the German content, that is, mistranslation exists. Therefore, the translation function has low availability, which makes it difficult to meet a requirement of a user.

### SUMMARY

This application discloses a translation method, an electronic device, and a computer storage medium, to quickly and accurately obtain a translation result corresponding to source text in mixed languages and display translation results of content in different languages in different display manners, thereby implementing a search-free function in a "language dimension" and improving user experience.

According to a first aspect, this application provides a translation method applied to an electronic device. The method includes: receiving a first input operation of a user; displaying first text and second text in response to the first input operation, where the first text is in a first language, the second text is in a second language, and the first language is different from the second language; receiving a first translation request of the user; and displaying a first interface, where the first interface includes third text and fourth text, the third text and the fourth text are in a third language, the third language is different from the first language, the third text is obtained by translating the first text, the fourth text corresponds to the second text, and a display manner of the third text is different from a display manner of the fourth text.

In some examples, the display manner includes at least one of the following: highlighted or not, a font weight, a font size, a font color, whether a font is italic, a font type, whether an underscore is set, whether a shading background is set for a font, a color of a shading background of a font, a pattern of a shading background of a font, whether a border is set around a font, a border shape of a font, a border width of a font, and a border color of a font.

In the foregoing method, for source text in mixed languages (including the first text and the second text in different languages), the electronic device may accurately obtain a translation result (including the third text and the fourth text) corresponding to the source text, to avoid mistranslation and omission. In addition, the electronic device displays the third text and the fourth text in the translation result in different display manners. In this way, the third text corresponding to the first text can be quickly located without comparing the source text with the translation result element by element by the user, to implement a search-free function in a "language dimension", thereby effectively meeting a user requirement.

In a possible implementation, when the second language is the same as the third language, the fourth text is the same as the second text; and when the second language is different from the third language, the fourth text is obtained by translating the second text.

In the foregoing method, the source text includes the first text in the first language different from the third language, and the second text in the second language the same as the third language. The electronic device may perform automatic recognition, translate the first text, and not translate the second text, thereby avoiding a case of omission of the first text and avoiding a case of a waste of resources caused by translating the second text.

In a possible implementation, the first interface includes the first text and the second text, a display manner of the first text is the same as the display manner of the third text, and a display manner of the second text is the same as the display manner of the fourth text.

In the foregoing method, when the electronic device displays the source text and the corresponding translation result, the display manner of the first text may be the same as that of the corresponding third text, and the display manner of the second text may be the same as that of the corresponding fourth text. This further improves availability of a search-free function in a "language dimension", so that the user can directly and quickly obtain a correspondence between content in different languages in the source text and text in the translation result based on the display manners, thereby further improving efficiency of searching for needed text by the user.

In a possible implementation, the first interface includes information about the first language and the second language.

In the foregoing method, the user may intuitively obtain language information of the source text, so that the user does not need to perform another operation to obtain the language information of the source text, thereby reducing user operations and further improving user experience.

In a possible implementation, the first interface includes information about the third language. In the foregoing method, the user may intuitively obtain information about a target language (that is, the third language) to which translation needs to be performed, thereby further improving user experience.

In a possible implementation, the first user interface includes a first control, and the first control is used to implement at least one of the following functions: copying the third text, saving the third text, and forwarding the third text.

In the foregoing method, the electronic device may provide functions such as one-click copy, one-click save, and one-click forward for the translation result (that is, the third text) corresponding to the first text in the first language. The user does not need to manually select the third text and then implements a function such as copy/save/forward for the third text by using another operation, thereby reducing user operations and further improving user experience.

In a possible implementation, receiving the first input operation of the user includes: receiving the first input operation of the user on a second interface, where the second interface includes a first instant messaging application interface, and the first input operation includes selecting text in the first instant messaging application interface.

In a possible implementation, receiving the first input operation of the user includes: receiving the first input operation of the user on a third interface, where the third interface includes a first translation application interface, and the first input operation includes inputting the first text and the second text in an input box in the first translation application interface.

In a possible implementation, receiving the first input operation of the user includes: receiving the first input operation of the user on a fourth interface, where the fourth interface includes a first browser application interface, the first browser application interface includes fifth text, and the first input operation includes selecting the first text and the second text in the fifth text.

In the foregoing method, translation of mixed languages may be performed and a search-free function in a "language dimension" may be implemented in different application interfaces and different application scenarios. This is not limited to a specific scenario, has universality, and has high function availability.

In a possible implementation, the third text in the first interface is in an emphasized state, and the first text corresponding to the third text is determined from the first text in the first language and the second text in the second language according to a preset rule.

In a possible implementation, the first language is a minority language.

In the foregoing method, the electronic device may automatically recognize content in a language that may be of interest to the user in the source text, that is, the first text in the first language, and emphasize the translation result (that is, the third text) corresponding to the first text, so that the user can quickly obtain the third text, thereby further improving efficiency of obtaining needed content by the user and improving user experience.

In a possible implementation, after receiving the first translation request of the user, the method further includes: processing the first text and the second text by using a classifier to obtain first information, where the first information indicates that the first text and the second text are in mixed languages; and obtaining a language of each symbol in the first text and the second text by using a tagger, to obtain a word-level language detection result, where the word-level language detection result includes the first language and the second language, and the first interface is displayed based on the word-level language detection result.

In a possible implementation, the method further includes: receiving a second input operation of the user; displaying sixth text in response to the second input operation; receiving a second translation request of the user; processing the sixth text by using the classifier to obtain second information, where the second information indicates that the sixth text is in a fourth language, the second information is a sentence-level language detection result, and the tagger is not enabled when the information obtained by the classifier is the sentence-level language detection result; and displaying seventh text, where the seventh text is obtained by translating the sixth text.

In the foregoing method, the electronic device may first perform quick sentence-level language detection once by using the classifier to determine whether the source text is in mixed languages, and perform accurate word-level language detection only when a determining result is that the source text is in mixed languages. In other words, two segments of determining are used. In this way, detection accuracy can be ensured and a detection speed can be greatly improved. Downstream translation performed based on such a language detection result can effectively improve downstream translation quality and a translation speed.

According to a second aspect, this application provides an electronic device, including a transceiver, a processor, and a memory. The memory is configured to store a computer program. The processor invokes the computer program to perform the translation method provided in the first aspect and any implementation of the first aspect of this application.

According to a third aspect, this application provides a computer storage medium. The computer storage medium stores a computer program. When the computer program is executed by a processor, the translation method provided in the first aspect and any implementation of the first aspect of this application is implemented.

According to a fourth aspect, this application provides a computer program product. When the computer program product runs on an electronic device, the electronic device is enabled to perform the translation method provided in the first aspect and any implementation of the first aspect of this application.

According to a fifth aspect, this application provides an electronic device. The electronic device includes the method or the apparatus for executing any aspect or any implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, the descriptions of the technical features, the technical solutions, or the beneficial effects in this application do not necessarily mean a same implementation. Further, the technical features, the technical solutions, and the beneficial effects described in this application may be combined in any appropriate manner. Persons skilled in the art may understand that this application may be implemented without one or more specific technical features or technical solutions, or beneficial effect in a specific implementation. In other implementations, additional technical features and beneficial effects may also be identified in specific implementations that do not reflect all implementations.

### BRIEF DESCRIPTION OF DRAWINGS

The following describes the accompanying drawings used in this application.
FIG. 1 is a diagram of a hardware structure of an electronic device according to this application;
FIG. 2 is a diagram of a software architecture of an electronic device according to this application;
FIG. 3 is another diagram of a software architecture of an electronic device according to this application;
FIG. 4 is a diagram of an architecture of a multi-granularity language detection system according to this application;
FIG. 5(A) and FIG. 5(B) are diagrams of user interfaces according to this application;
FIG. 6(A), FIG. 6(B), FIG. 6(C), and FIG. 6(D) are other diagrams of user interfaces according to this application;
FIG. 7(A), FIG. 7(B), and FIG. 7(C) are other diagrams of user interfaces according to this application;
FIG. 8 is a schematic flowchart of a translation method according to this application; and
FIG. 9 is a schematic flowchart of another translation method according to this application.

### DESCRIPTION OF EMBODIMENTS

The following describes technical solutions in embodiments of this application with reference to accompanying drawings. It is clearly that the described embodiments are some but not all of embodiments of this application. All other embodiments obtained by persons of ordinary skill in the art based on embodiments of this application without creative efforts shall fall within the protection scope of this application.

In the descriptions of embodiments this application, unless otherwise stated, "/" means or. For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, in the descriptions in embodiments of this application, "a plurality of' means two or more.

In the following, the terms "first" and "second" are merely intended for the purpose of description, and shall not be understood as an indication or implication of relative importance or implicit indication of a quantity of indicated technical features. Therefore, a feature limited by "first" or "second" may explicitly or implicitly include one or more features.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme.

An electronic device may provide a function of translating text (that is, to-be-translated text, which may be briefly referred to as source text) input or selected by a user into text in a target language, which may be briefly referred to as a translation function. In this application, the language may also be referred to as a language, a language category, a language type, or the like. The current translation function may be implemented in the following two manners.

Manner 1: The source text is first recognized by using a sentence-level language detection technology, and a language detection result obtained through recognition is a predicted language (only one) of the source text. Then, a corresponding machine translation model is determined based on the language detection result, and the source text is used as input into the machine translation model to obtain an output translation result. It should be noted that one machine model is used to translate text in one language, and different machine translation models need to be used to translate text in different languages.

In the manner 1, only a case in which the source text is in a single language (single-language) is considered. When the source text is in mixed languages (mixed-language, where mixed languages are a plurality of languages), problems such as mistranslation and omission often occur. For example, it is assumed that the source text is in mixed languages of Chinese and Korean: " 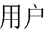 aaa (User aaa) 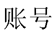 : aaa123 (Account: aaa123) 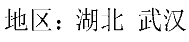 (Region: Wuhan, Hubei) 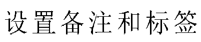 (Set Remark) 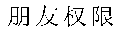 (Privacy) 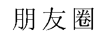 (Moments) 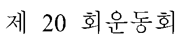 (20^{th} sports meeting) 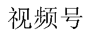 (Video channel) 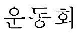 (Sports meeting) 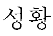 (Grand scale) 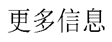 (More)". In the manner 1, Korean content may not be translated (for example, when a target language is Chinese), and a translation result is consistent with the source text, that is, omission exists. For another example, it is assumed that the source text is in mixed languages of English and German (He turned around and asked: "Entschuldigen Sie, sprechen Sie Deutsch? (Excuse me, do you speak German?)" but passersby ignored him and walked straight ahead). In the manner 1, German content in the source text may be recognized as English content, and the German content is translated in a translation manner for the English content, which leads to incorrect translation of the German content (for example, "Entschuldigen Sie, sprechen Sie Deutsch? (Excuse me, do you speak German?)" is translated into " 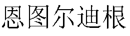 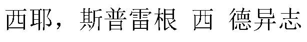 (entuerdigen xiye, sipuleigen xi deyizhi)"), that is, mistranslation exists. Therefore, translation quality is poor, which makes it difficult to meet a requirement of a user.

Manner 2: The source text is first recognized by using a word-level language detection technology, and a language detection result obtained through recognition is a predicted language (one or more) of each element (that is, a character, a word, or punctuation) in the source text. Then, the source text is split based on the language, text in a same language is used as input into a machine translation model corresponding to the language to obtain output. Finally, output of at least one machine translation model is combined to obtain a translation result. For example, it is assumed that the source text is in mixed languages of English and German (He turned around and asked: "Entschuldigen Sie, sprechen Sie Deutsch? (Excuse me, do you speak German?)" but passersby ignored him and walked straight ahead.). A language detection result is that languages of the 0^{th} to 5^{th} elements (that is, He turned around and asked:) and the 15^{th} to 23^{rd} elements (that is, but passersby ignored him and walked straight ahead.) are English, and a language of the 6^{th} to 14^{th} elements (that is, "Entschuldigen Sie, sprechen Sie Deutsch? (Excuse me, do you speak German?)") is German. Therefore, the 0^{th} to 5^{th} elements and the 15^{th} to 23^{rd} elements are sent to a machine translation model corresponding to English for translation, and the 6^{th} to 14^{th} elements are sent to a machine translation model corresponding to German for translation.

In the manner 2, only a case in which the source text is in mixed languages is considered. When the source text is in a single language, in the manner 2, language detection still needs to be performed on each element in the source text. This not only does not improve translation quality, but also greatly increases computation costs, greatly reducing a translation speed. In an actual translation scenario, cases in which the source text is in a single language is more than cases in which the source text is in mixed languages. Therefore, costs of using the manner 2 are far greater than benefits, and the translation function has poor availability.

In the manner 1 and the manner 2, when the source text is in mixed languages, when the electronic device displays a translation result, display manners of text in different languages are the same. However, the user may want to obtain content in only one of the languages, and the user usually needs to compare the source text with the translation result element by element. As a result, the user is likely to be confused and cannot find needed translation content, which severely affects user experience.

This application provides a translation method, applied to an electronic device. The electronic device may first determine whether source text is in a single language or in mixed languages. When the source text is in a single language, a language detection result of the source text may be directly obtained based on a determining result. When the source text is in mixed languages, a language detection result is obtained by using a word-level language detection technology, and then translation is performed based on the obtained language detection result. It may be understood that a sentence-level language detection technology is used when the source text is in a single language, and the word-level language detection technology is used when the source text is in mixed languages. In this way, a translation speed can be greatly improved with translation quality being ensured.

In addition, for the source text in mixed languages, when displaying the translation result, the electronic device may display content in different languages in different display manners. For example, for source text including content in two languages, when displaying a translation result, the electronic device may emphasize (for example, highlight) a translation result of content in a specific language. The content in the language may be understood as content in a language (which may be referred to as content in a language of interest) that is automatically recognized by the electronic device and that may be of interest to/needed by the user. In other words, the electronic device provides a search-free function in a "language dimension", so that the user can quickly obtain needed content.

Therefore, this application can resolve technical problems existing in the manner 1 and the manner 2, meet a requirement of a user in a translation scenario, and improve availability of a translation function.

"Emphasize" in this application may be but is not limited to highlight, bold font display, italic font display, underscore setting, shading background setting, display of a border such as a circle or a rectangle around an element, a font color different from a font color of other text, a font type different from a font type of other text (for example, the regular script and the Song typeface belong to different font types), a font size different from a font size of other text, and the like.

In this application, the electronic device may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart household device like a smart television or a smart camera, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

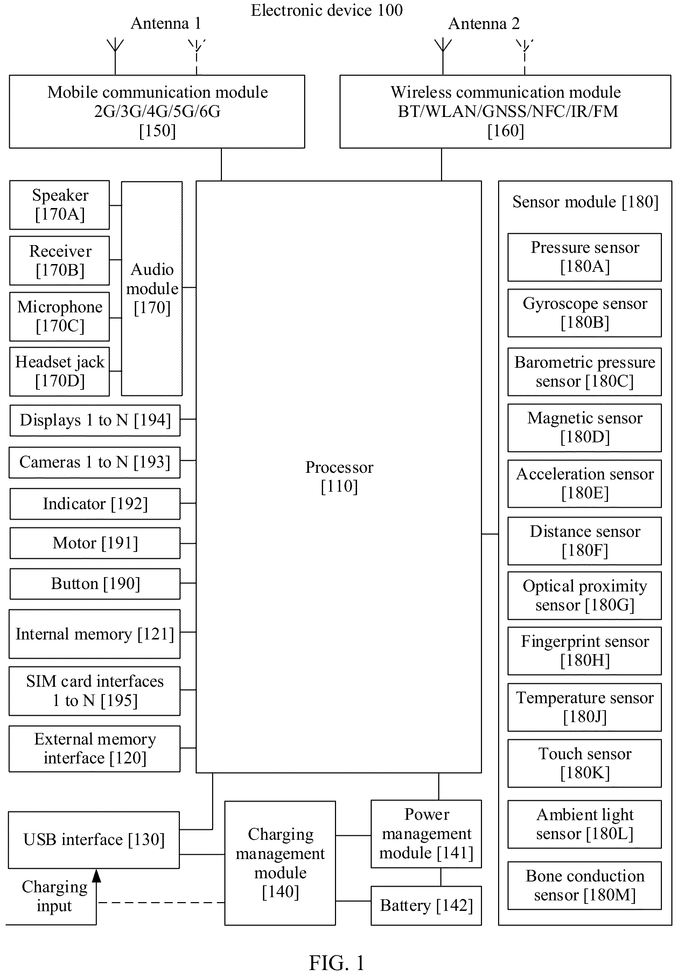

FIG. 1 is a diagram of an example of a hardware structure of an electronic device 100.

It should be understood that the electronic device 100 shown in FIG. 1 is merely an example of the electronic device, and the electronic device 100 may have more or fewer components than those shown in the figure, two or more components may be combined, or different component configurations may be used. Various components shown in FIG. 1 may be implemented in hardware, software, or a combination of hardware and software that includes one or more signal processors and/or application-specific integrated circuits.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may generate an operation control signal based on an instruction operation code and a time sequence signal, to complete control of instruction fetching and instruction execution.

A memory may be further disposed in the processor 110, and is configured to store instructions and data. In an implementation, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces a waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a charger. When charging the battery 142, the charging management module 140 may further supply power to the electronic device 100 by using the power management module 141. The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In another implementation, the antenna may be used in combination with a tuning switch.

The mobile communication module 150 may provide a wireless communication solution that is applied to the electronic device 100 and that includes a second generation (second generation, 2G) mobile communication technology/a third generation (third generation, 3G) mobile communication technology/a fourth generation (fourth generation, 4G) mobile communication technology/a fifth generation mobile (fifth generation, 5G) communication technology/a sixth generation (sixth generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some functional modules of the mobile communication module 150 may be disposed in the processor 110. In an implementation, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In an implementation, the modem processor may be an independent component. In another implementation, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave by using the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may specifically include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The electronic device 100 may implement a shooting function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scene. In an implementation, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In an implementation, the electronic device 100 may include one or N cameras 193, where N is a positive integer greater than 1.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various functional applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In an implementation, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100.

The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In an implementation, touch operations that are performed at a same touch position but have different touch operation intensity may correspond to different operation instructions.

The gyroscope sensor 180B may be configured to determine a moving posture of the electronic device 100.

The barometric pressure sensor 180C is configured to measure barometric pressure.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100.

The distance sensor 180F is configured to measure a distance.

The optical proximity sensor 180G may include, for example, a light-emitting diode (LED) and an optical detector, for example, a photodiode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In another implementation, the touch sensor 180K may alternatively be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch button. The electronic device 100 may receive key input, and generate a key signal input related to a user setting and function control of the electronic device 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (harmony) operating system (operating system, OS), or another software system. In embodiments of this application, an Android system with a layered architecture is used as an example to describe a software structure of the electronic device 100.

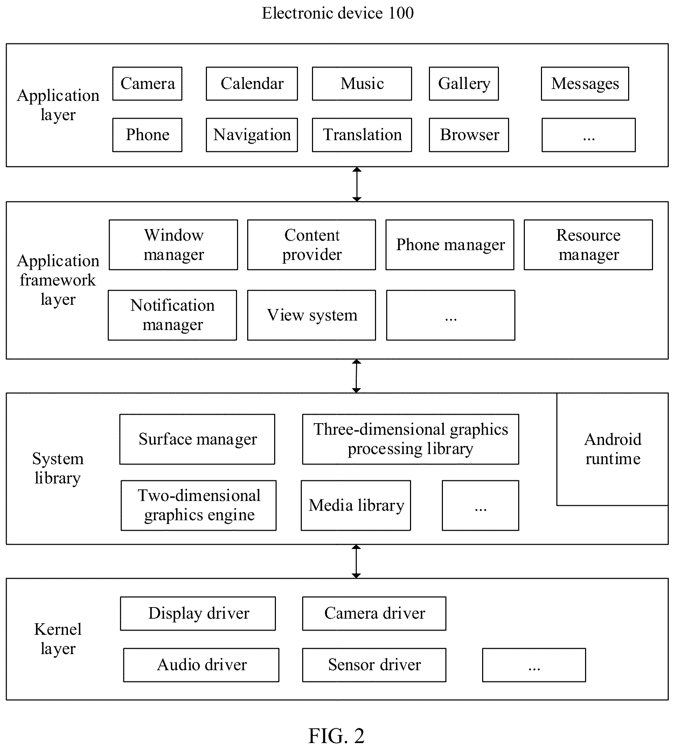

FIG. 2 is a diagram of an example of a software architecture of an electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Calendar, Music, Gallery, Messages, Phone, Navigation, Translator, and Browser. Translation in this application may be an independent application, or may be a functional module integrated into another application. This is not limited in this application. The application in this application may also be replaced with software in another form such as an applet or an atomic service.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying text and a control for displaying an image. The view system may be configured to construct an application. A display interface may include one or more views. For example, a display interface including a Messages notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short stay without requiring a user interaction. For example, the notification manager is configured to: notify download completion, and give a message notification. The notification manager may alternatively be a notification that appears in a top status bar of the system in a form of a graph or scroll bar text, for example, a notification of an application that is run on the background, or may be a notification that appears on the screen in a form of a dialog window. For example, text information is prompted in the status bar, an alert tone is made, the electronic device 100 vibrates, or the indicator light blinks.

The Android runtime includes a kernel library and a virtual machine. The Android runtime is responsible for scheduling and management of the Android system.

The kernel library includes two parts: a function that needs to be called in a java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to a translation scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a tap operation, and a control corresponding to the tap operation is a translate control of a translation application. The translation application invokes an interface of the application framework layer, translates source text input by a user in an input box of the translation application to obtain text in a target language (that is, a translation result), then invokes the kernel layer to control the display driver, and displays the text in the target language by using the display 194.

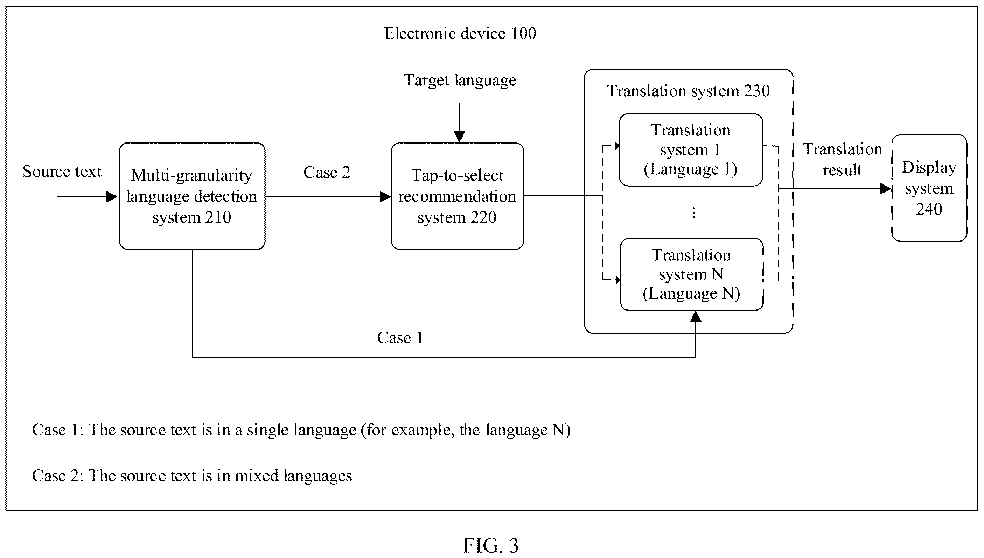

FIG. 3 is a diagram of another example of a software architecture of an electronic device 100.

As shown in FIG. 3, the electronic device 100 may include a multi-granularity language detection system 210, a tap-to-select recommendation system 220, a translation system 230, and a display system 240. The translation system 230 may include N translation systems. Any one of the translation systems may be represented as a translation system i. The translation system i is used to translate text in a corresponding language i, where i is a positive integer less than or equal to N, and N is a positive integer greater than 1.

The multi-granularity language detection system 210 may be used to recognize a language of source text input or selected by a user. The multi-granularity language detection system 210 may first determine whether the source text is in a single language or in mixed languages, then select, based on a determining result, whether to perform word-level language detection on the source text to obtain the language of the source text, and finally select, based on the obtained language of the source text, a next-level system for receiving the source text. In a case 1 shown in FIG. 3, when recognizing that the source text is in a single language, the multi-granularity language detection system 210 may directly recognize the language of the entire source text. At most one language is obtained through recognition. A recognition result may be referred to as a sentence-level language detection result. After obtaining the sentence-level language detection result, the multi-granularity language detection system 210 may send the source text to a translation system corresponding to the sentence-level language detection result in the translation system 230. FIG. 3 is illustrated by using an example in which the sentence-level language detection result is a language N. In this case, the multi-granularity language detection system 210 sends the source text to a translation system N used to translate the language N. In a case 2 shown in FIG. 3, when recognizing that the source text is in mixed languages, the multi-granularity language detection system 210 may perform word-level language detection on the source text, that is, recognize a language of each element (that is, a character, a word, or punctuation) in the source text. At least one language is obtained through recognition. A recognition result may be referred to as a word-level language detection result. After obtaining the word-level language detection result, the multi-granularity language detection system 210 may send both the source text and the word-level language detection result to the tap-to-select recommendation system 220 for processing.

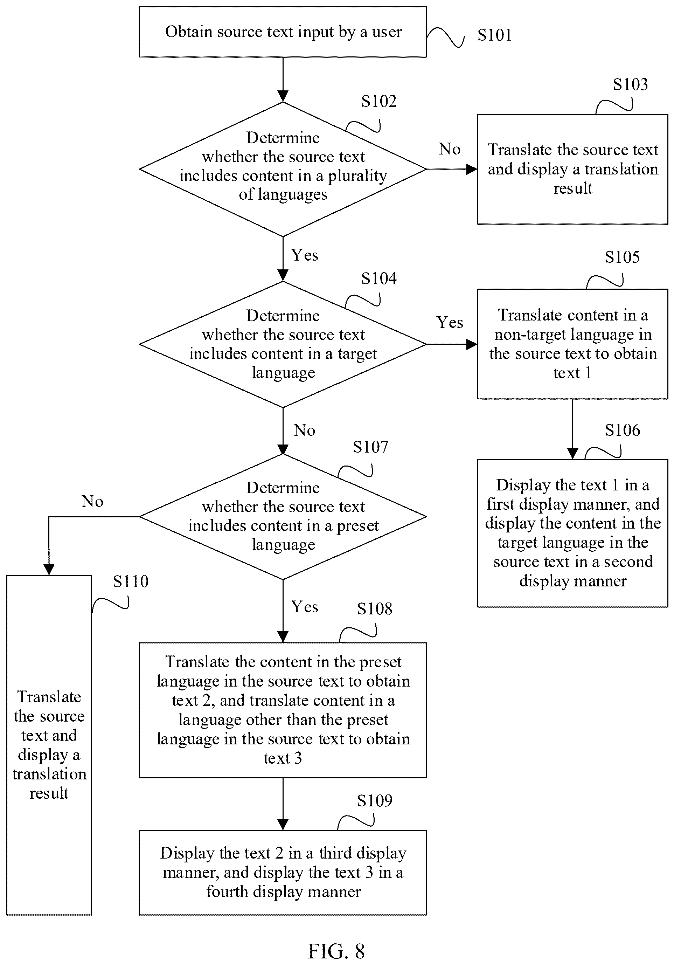

The tap-to-select recommendation system 220 may be used to recognize content (which may be referred to as content in a language of interest) in a language that may be of interest to the user in the source text. The tap-to-select recommendation system 220 may recognize, according to a preset rule based on the word-level language detection result sent by the multi-granularity language detection system 210, a target language, and pre-stored language type information, content in at least one language that may be of interest to the user (that is, content in a language of interest) from content in a plurality of languages included in the source text. Content in the source text except the content in the language of interest may be referred to as content in a language of no interest. For specific examples, refer to S104 to S109 in FIG. 8. A translation function of the electronic device 100 is to translate the source text into text in the target language. The target language may be preset by the electronic device 100, or may be set by the user. The language type information may include, but is not limited to, classification of languages on the Internet, for example, whether the language is classified as a minority language. After recognizing the content in the language of interest, the tap-to-select recommendation system 220 may send the content in the language of interest to a corresponding translation system in the translation system 230 based on the language of the content in the language of interest. When the content in the language of interest includes content in a plurality of languages, the content in different languages in the content in the language of interest is sent to different translation systems in the translation system 230 for processing. In an implementation, the tap-to-select recommendation system 220 may further send the content in the language of no interest to a corresponding translation system in the translation system 230 based on the language of the content in the language of no interest. When the content in the language of no interest includes content in a plurality of languages, the content in different languages in the content in the language of no interest is sent to different translation systems in the translation system 230 for processing.

The translation system 230 may be configured to receive the source text and output a translation result of the source text to the display system 240. Any translation system (translation system i) in the translation system 230 may be configured to receive and translate text in a language i. In the case 2 shown in FIG. 3 (that is, the source text is in mixed languages), the translation system 230 may be further configured to recombine translation results output by a plurality of translation systems, that is, perform permutation and combination according to an arrangement manner of elements in the source text, to obtain a translation result in a consistent format with the source text.

The display system 240 may be configured to display the translation result of the source text. In the case 2 shown in FIG. 3 (that is, the source text is in mixed languages), the display system 240 may display a translation result of the content in the language of interest and a translation result of the content in the language of no interest/the content in the language of no interest in different display manners, for example, emphasize the translation result of the content in the language of interest. When the tap-to-select recommendation system 220 sends the content in the language of no interest to the translation system 230 for translation, the display system 240 displays the translation result of the content in the language of no interest. When the content in the language of no interest is not translated, the display system 240 displays the content in the language of no interest.

In an implementation, the electronic device 100 may further include an interaction module. The interaction module may be configured to: receive a user operation of the user for the translation result of the content in the language of interest displayed by the display system 240, and trigger a copy function, a forward function, a save function, and the like for the translation result based on the user operation.

The following describes an example of an architecture and a processing process of the multi-granularity language detection system 210 shown in FIG. 3.

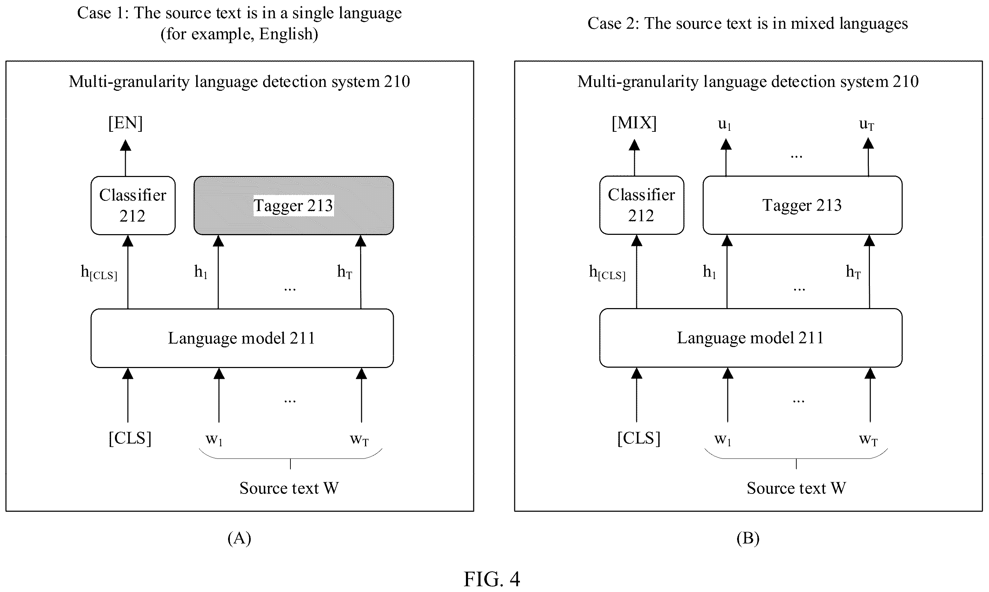

FIG. 4 is a diagram of an example of an architecture of the multi-granularity language detection system 210 in the electronic device 100.

The multi-granularity language detection system 210 shown in FIG. 4 may be constructed based on a deep learning model, and is obtained through training in a multi-task self-supervised learning manner by using a stochastic gradient descent method.

As shown in (A) and (B) in FIG. 4, the multi-granularity language detection system 210 may include a language model 211, a classifier (classifier) 212, and a tagger (tagger) 213. The language model 211 may be a BERT model, and may be used to obtain a high-dimensional representation of input content. The classifier 212 may be configured to determine whether source text is in a single language or in mixed languages. The tagger 213 may be configured to recognize a language of each element (that is, a character, a word, or punctuation) in the source text.

Next, the processing process of the multi-granularity language detection system 210 is described by using an example in which the source text is text with a length of T (including T elements). The source text may be represented as *W =* {*wₜ*|*t =* 1, *... , T*}, where *wₜ* is the t^{th} element in the source text arranged from front to back.

First, as shown in (A) and (B) in FIG. 4, the language model 211 may receive the source text *W* and a preset detection element [CLS] as input, perform high-dimensional representation on each element *wₜ* in the source text and the detection character [CLS], and output corresponding latent vectors: a latent vector *H =* {*hₜ*|*t =* 1, ... *, T*} corresponding to the source text and a latent vector *h*_{[*CLS*]} corresponding to the detection character, where *hₜ* is a latent vector corresponding to *wₜ.* The detection element [CLS] may be an element that is added before the source text *W* and that is used to determine whether the source text is in a single language or in mixed languages.

Then, as shown in (A) and (B) in FIG. 4, the latent vector *h*_{[*CLS*]} that corresponds to the detection element [CLS] and that is output by the language model 211 may be input to the classifier 212, and the classifier 212 may determine, based on *h*_{[*CLS*]}, whether the source text *W* is in a single language or in mixed languages, and output a corresponding determining result. The determining result output by the classifier 212 may be used for determining whether to enable the tagger 213.

In a case 1 shown in (A) in FIG. 4, when determining that the source text *W* is in a single language, the classifier 212 may directly output an identifier of a language (that is, a sentence-level language detection result) of the entire source text. For example, an identifier of English is [EN], an identifier of German is [DE], and an identifier of Chinese is [ZH]. Identifiers of other languages are similar and are not listed one by one. (A) in FIG. 4 is illustrated by using an example in which the sentence-level language detection result is English. In the case 1, the tagger 213 is not enabled. Therefore, even if the tagger 213 receives the latent vector *H* that corresponds to the source text and that is output by the language model 211, the tagger 213 does not perform processing. The tagger 213 shown in (A) in FIG. 4 is in gray, which indicates that the tagger 213 is not enabled. Therefore, in the case 1, output of the multi-granularity language detection system 210 is output of the classifier 212, that is, the sentence-level language detection result.

In a case 2 shown in (B) in FIG. 4, when the classifier 212 determines that the source text *W* is in mixed languages, a preset mix symbol [MIX] may be output. The mix symbol indicates that the source text is in mixed languages. In this case, the tagger 213 is enabled. After the classifier 212 outputs the mix symbol [MIX], the tagger 213 may recognize a language of each element in the source text based on input content (that is, the latent vector *H* that corresponds to the source text and that is output by the language model 211), and output the language of each element (that is, a word-level language detection result) in the source text. The language may be represented as *U* = {*uₜ*|*t =* 1, *... , T*}, where *uₜ* is a language identifier of *wₜ.* Descriptions of the language identifier are similar to the descriptions of the language identifier output by the classifier 212. Details are not provided again. Therefore, in the case 2, output of the multi-granularity language detection system 210 is output *U* of the tagger 213, that is, the word-level language detection result.

In the case 1, the multi-granularity language detection system 210 performs a fast sentence-level language detection process (implemented by using the classifier 212), but does not perform a word-level language detection process (the tagger 213 is not enabled). In the case 2, the multi-granularity language detection system 210 first performs a fast sentence-level language detection process (implemented by using the classifier 212), and then performs an accurate word-level language detection process (implemented by using the tagger 213). The multi-granularity language detection system 210 shown in FIG. 4 implements both sentence-level language detection and word-level language detection by using a deep learning model, and may output a sentence-level language detection result or a multi-granularity language detection result based on a case.

The multi-granularity language detection system 210 shown in FIG. 4 may first perform quick sentence-level language detection once to determine whether the source text is in mixed languages, and perform accurate word-level language detection only when a determining result is that the source text is in mixed languages. In other words, two segments of determining are used. In this way, detection accuracy can be ensured and a detection speed can be greatly improved. Downstream translation performed based on such a language detection result can effectively improve downstream translation quality and a translation speed.

It may be understood that the architecture and the processing process described in FIG. 4 do not constitute a specific limitation on the multi-granularity language detection system 210. The multi-granularity language detection system 210 in this embodiment of this application may include but is not limited to any system, module, deep learning model, and/or statistical model that can implement functions similar to those implemented by the multi-granularity language detection system 210.

The following describes application scenarios in embodiments of this application and examples of user interfaces in the scenarios.

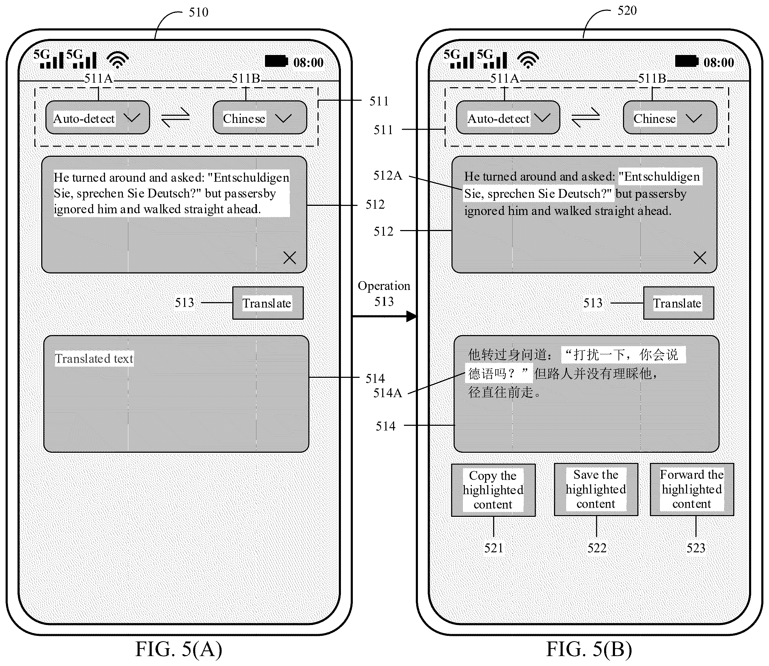

FIG. 5(A) and FIG. 5(B) are diagrams of examples of user interfaces in a translation scenario.

As shown in FIG. 5(A), the electronic device 100 may display a user interface 510 of a translation application. The user interface 510 may include language information 511, an input box 512, a translate control 513, and a display box 514. The language information 511 may include source language information 511A and target language information 511B. The source language information 511A may present "Auto-detect", to indicate that the electronic device 100 automatically detects a language of source text when performing translation. The source language information 511A may be further used by a user to select the language of the source text, for example, may select a language option such as "English", "German", or "Chinese". The target language information 511B may be used to display a default language or a target language selected by the user. A specific option example is similar to an example of the source language information 511A. The user interface 510 is illustrated by using an example in which the target language information 511B presents "Chinese". The input box 512 may be used to input the to-be-translated source text, and the input source text (He turned around and asked: "Entschuldigen Sie, sprechen Sie Deutsch? (Excuse me, do you speak German?)" but passersby ignored him and walked straight ahead.) is displayed in the input box 512 in the user interface 510. The translate control 513 may be used to trigger translation of the text in the input box 512. The display box 514 may be used to display a translation result of the text in the input box 512. The electronic device 100 may receive a user operation (the user operation is, for example, a touch operation, and the touch operation is, for example, a tap operation) on the translate control 513; in response to the user operation, translate the source text displayed in the input box 512 into text in the target language (that is, Chinese); and display the text in the target language in the display box 514. For a specific example, refer to a user interface 520 shown in FIG. 5(B).

As shown in FIG. 5(B), the user interface 520 is similar to the user interface 510. A difference lies in that the electronic device 100 displays the source text in the input box 512 in different manners. In the user interface 520, a display manner of German text 512A ("Entschuldigen Sie, sprechen Sie Deutsch? (Excuse me, do you speak German?)") is different from that of English text included in the input box 512. The German text may be in an emphasized (for example, highlighted) state. In addition, the translation result of the source text ( 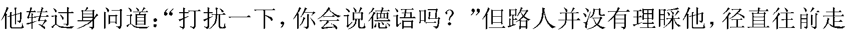 (He turned around and asked: "Excuse me, do you speak German?" but passersby ignored him and walked straight ahead)) is displayed in the display box 514 in the user interface 520. A display manner of a translation result 514A (" 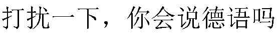 ? (Excuse me, do you speak German?)") of the German text in the source text is different from that of a translation result of the English text. The translation result of the German text is in the emphasized (for example, highlighted) state. In this way, the user can quickly obtain content in a same language in the source text and the translation result by using the input box 512 and the display box 514 in the user interface 520, and the user does not need to compare the source text and the translation result element by element, to implement a search-free function in a "language dimension", thereby improving user experience.

As shown in FIG. 5(B), the user interface 520 further includes a copy control 521, a save control 522, and a forward control 523. The copy control 521 may be used to trigger copying the translation result of the German text emphasized in the display box 514. The save control 522 may be used to trigger saving the translation result of the German text emphasized in the display box 514. The forward control 523 may be used to trigger forwarding the translation result of the German text emphasized in the display box 514, for example, to a contact by using an SMS message, or to a social friend through a social application. In other words, the electronic device 100 may provide auxiliary interaction functions such as one-click copy, save, and forward for a translation result of content in a language of interest, to further improve user experience.

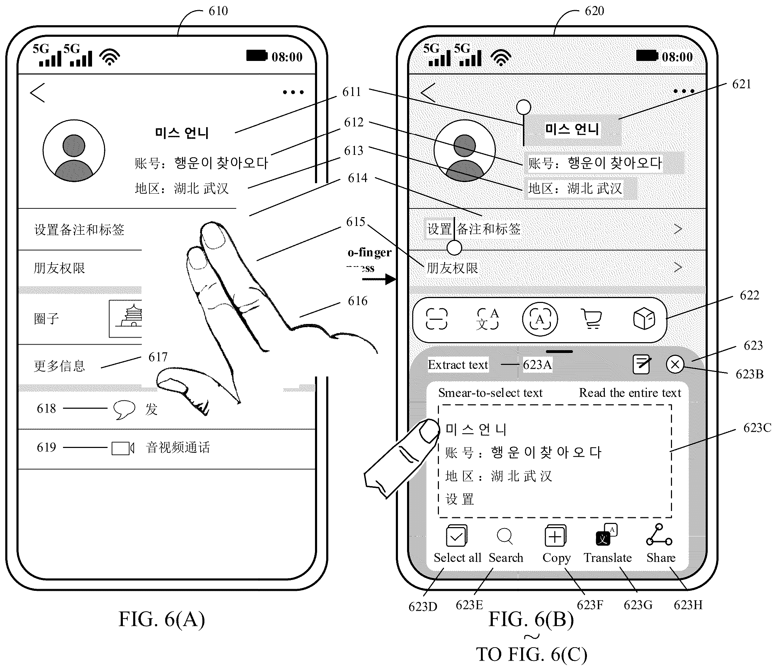

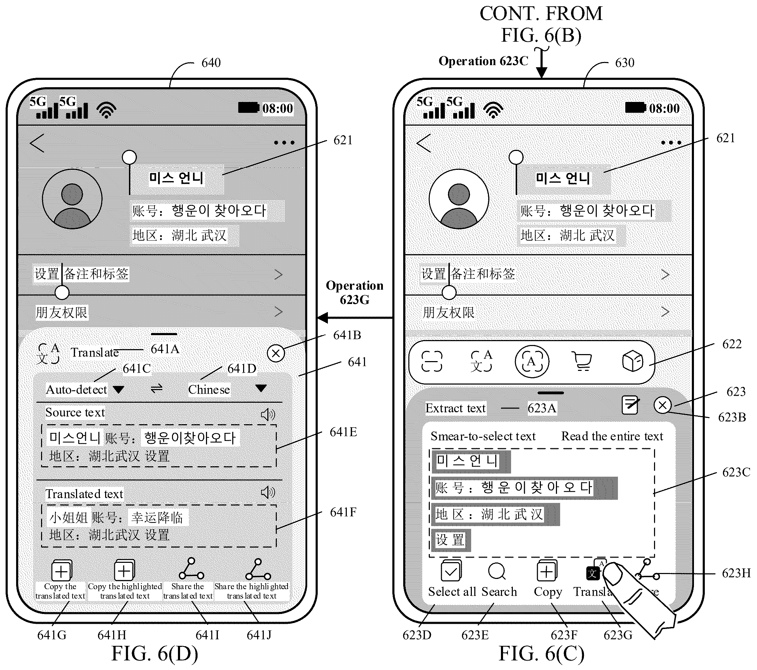

FIG. 6(A), FIG. 6(B), FIG. 6(C), and FIG. 6(D) are diagrams of examples of user interfaces in another translation scenario.

As shown in FIG. 6(A), the electronic device 100 may display a user interface 610. In an implementation, the user interface 610 is an interface that is used to display personal information of a user 1 in an instant messaging application. The user interface 610 may include a user nickname 611, an account name 612, a region 613, a remark control 614, a permission control 615, a control 616, a control 617, a message control 618, and a call control 619. The user nickname 611 is used to display a nickname " 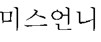 (Miss)" of the user 1, the account name 612 may include elements " 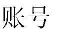 (Account): 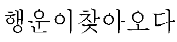 (Luck arrived)", and the region 613 may include elements " 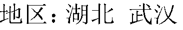 (Region: Wuhan, Hubei)". The remark control 614 may include elements " 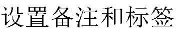 (Set Remark)" used by a current user to set a remark and/or a tag of the user 1. The permission control 615 may include elements " 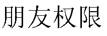 (Privacy)" used by the current user to set permission for the user 1. The control 616 may include elements " 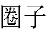 (Moments)" and an image, and is used to trigger display of content such as an image and text released by the user 1. The control 617 may include elements " 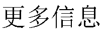 (More)" used to trigger display of other information about the user 1. The message control 618 may include elements " 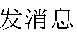 (Messages)" used to trigger display of a chat interface with the user 1. The call control 619 may include elements " 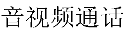 (Voice or Video Call)" used to trigger a voice call/video call with the user 1. The electronic device 100 may receive a user operation for the user interface 610. The user operation is, for example, a touch operation. The touch operation is, for example but not limited to, a two-finger press operation, a three-finger press operation, or a slide operation. In FIG. 6(A), an example in which the user operation is a two-finger press operation is used for description. The electronic device 100 may extract a part or all of text in the user interface 610 in response to the user operation. In this case, a user interface 620 shown in FIG. 6(B) may be displayed.

As shown in FIG. 6(B), the user interface 620 is similar to the user interface 610, and a difference lies in that a part of text 621 in the user interface 620 is in a selected state. The text 621 includes the elements in the user nickname 611, the elements in the account name 612, the elements in the region 613, and a part of the elements in the remark control 614, that is, " 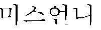 (Miss) 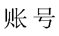 (Account): 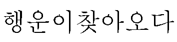 (Luck arrived) 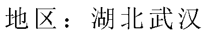 (Region: Wuhan, Hubei) 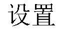 (Set)". In some examples, the electronic device 100 may respond to a user operation on text in the user interface 620. The user operation is, for example, a touch operation, and the touch operation is, for example, a slide operation, to change the text in the selected state, for example, to include more or fewer elements. The user interface 620 further includes a control bar 622 and a display box 623. The control bar 622 may include a plurality of controls, for example, a scan control, a translate control, a control for retracting the control bar 622, a shopping control, and a favorites control. The display box 623 may include a title 623A (including elements "Extract text"), a close control 623B, text 623C, and a plurality of function controls for the text 623C. Content of the text 623C is the same as that of the text 621 in the selected state, and may also be understood as text extracted from the user interface 610. The plurality of function controls include, for example, a select all control 623D, a search control 623E, a copy control 623F, a translate control 623G, and a share control 623H. The electronic device 100 may receive a user operation for a part or all of the text 623C. The user operation is, for example, a touch operation, and the touch operation is, for example, a slide operation. In response to the user operation, the part or all of the text 623C is selected. In FIG. 6(A), FIG. 6(B), FIG. 6(C), and FIG. 6(D), an example in which all of the text 623C is selected is used for description. In this case, a user interface 630 shown in FIG. 6(C) may be displayed.

As shown in FIG. 6(C), the user interface 630 is similar to the user interface 620, and a difference lies in that all elements in the text 623C in the user interface 630 are in a selected state. The electronic device 100 may receive a user operation for the translate control 623G in the user interface 630. The user operation is, for example, a touch operation, and the touch operation is, for example, a tap operation. In response to the user operation, the electronic device 100 may translate the selected text (that is, the text 623C) into text in a target language (in FIG. 6(A), FIG. 6(B), FIG. 6(C), and FIG. 6(D), Chinese is used as an example for description by default). In this case, a user interface 640 shown in FIG. 6(D) may be displayed.

As shown in FIG. 6(D), the user interface 640 is similar to the user interface 610, and a difference lies in that a part of text 621 (" 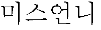 (Miss) 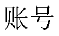 (Account): 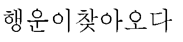 (Luck arrived) 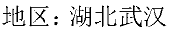 (Region: Wuhan, Hubei) 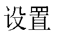 (Set)") in the user interface 640 is in a selected state and the user interface 640 further includes a translation box 641. The translation box 641 may include a title 641A (including an element "Translate"), a close control 641B, source language information 641C, target language information 641D, source text 641E, translated text 641F, and a plurality of function controls. The source language information 641C may present "Auto-detect", to indicate that the electronic device 100 automatically detects a language of source text when performing translation. The target language information 641D may be used to display a default language or a target language ("Chinese") selected by the user. Content of the source text 641E is the same as that of the selected text 621, and includes Chinese text and Korean text. A display manner of the Chinese text is different from that of the Korean text. The Korean text " 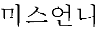 (Miss)" and the Korean text " 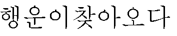 (Luck arrived)" are in an emphasized (for example, highlighted) state. The translated text 641F is text " 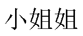 (Miss) 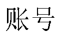 (Account): 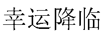 (Luck arrived) 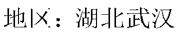 (Region: Wuhan, Hubei) 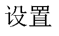 (Set)" that is in the target language (that is, Chinese) and that is obtained by translating the source text 641E. Herein, " 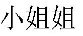 (Miss)" and " 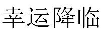 (Luck arrived)" are respectively translation results of the Korean text " 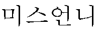 (Miss)" and the Korean text " 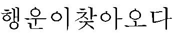 (Luck arrived)" in the source text 641E. Translation results of the two pieces of Korean text are in the emphasized (for example, highlighted) state. The plurality of function controls include, for example, a control 641G, a control 641H, a control 641I, and a control 641J. The control 641G is used to copy the translated text 641F. The control 641H is used to copy a translation result (that is, "highlighted translated text") of Korean text in the translated text 641F. The control 641I is used to share the translated text 641F. The control 641J is used to share the translation result (that is, the "highlighted translated text) of the Korean text in the translated text 641F.

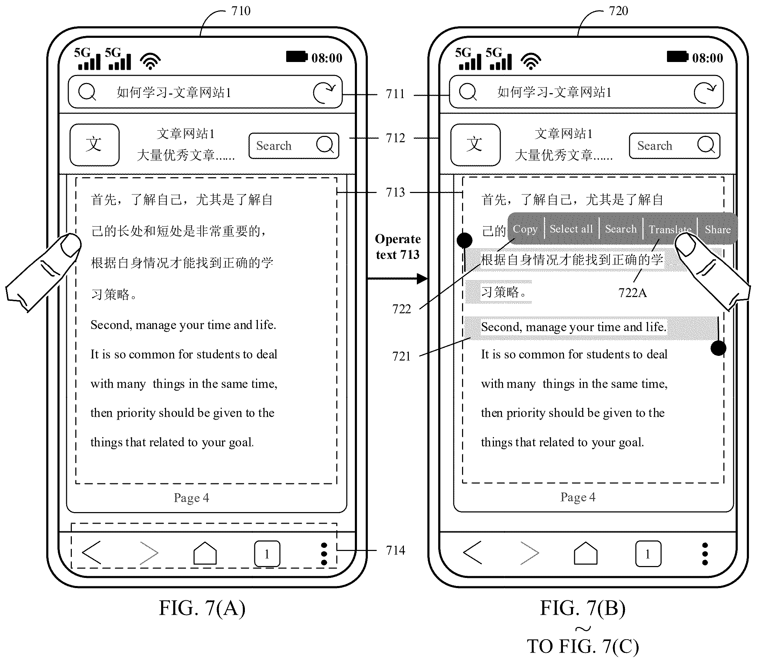

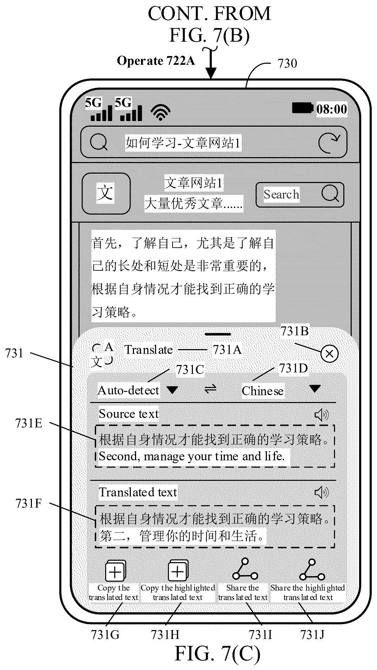

FIG. 7(A), FIG. 7(B), and FIG. 7(C) are diagrams of examples of user interfaces in another translation scenario.

As shown in FIG. 7(A), the electronic device 100 may display a user interface 710 of a browser, and the user interface 710 may include a website address bar 711, website information 712, text 713, and a control bar 714. The website address bar 711 may be used to display a current website address/website name, for example, includes elements " 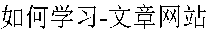 1 (How to learn-article website 1)" to indicate that a current web page is a web page of " 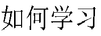 (How to learn)" at an article website 1. The website information 712 may include information such as a website name " 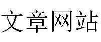 1 (Article website 1)", a website introduction, and a search box. The text 713 may be text content in the current web page, and may include elements " 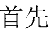 , 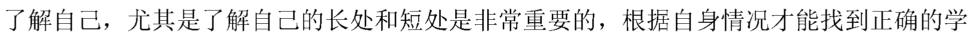 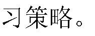 (First, it is very important to understand yourself, especially know your strengths and weaknesses, and a correct learning strategy can be found according to your own situation.) Second, manage your time and life. It is so common for students to deal with many things in the same time, then priority should be given to the things that related to your goal.". The control bar 714 may include a plurality of function controls, for example, a control for returning to a previous-level web page, a control for jumping to a next-level web page, a control for jumping to a home page of a browser application, a control for viewing a window of the browser application, and a control for viewing more information. The electronic device 100 may receive a user operation for a part or all of the text 713. The user operation is, for example, a touch operation, and the touch operation includes, for example, a touch and hold operation and a slide operation. In response to the user operation, the part or all of the text 713 is selected. In FIG. 7(A), FIG. 7(B), and FIG. 7(C), an example in which a part of the text 713 is selected is used for description. In this case, a user interface 720 shown in FIG. 7(B) may be displayed.

As shown in FIG. 7(B), the user interface 720 is similar to the user interface 710, and a difference lies in that text 721 in the text 713 displayed in the user interface 720 (" 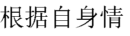 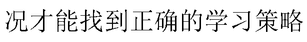 _{∘} (A correct learning strategy can be found according to your own situation.) Second, manage your time and life.") is in a selected state, and the user interface 720 further includes a function bar 722. The function bar 722 may include a plurality of function controls, for example, includes a copy control (used to copy the text 721), a select all control (used to select the entire text of the current web page, for example, set the text 713 to a selected state), a search control (used to search for the text 721 at another website), a translate control 722A, and a share control (used to share the text 721). The electronic device 100 may receive a user operation for the translate control 722A. The user operation is, for example, a touch operation, and the touch operation is, for example, a tap operation. In response to the user operation, the electronic device 100 may translate the selected text (that is, the text 721) into text in a target language (in FIG. 7(A), FIG. 7(B), and FIG. 7(C), Chinese is used as an example for description by default). In this case, a user interface 730 shown in FIG. 7(C) may be displayed.

As shown in FIG. 7(C), the user interface 730 is similar to the user interface 710, and a difference lies in that the user interface 730 further includes a translation box 731. The translation box 731 may include a title 731A (including an element "Translate"), a close control 731B, source language information 731C, target language information 731D, source text 731E, translated text 731F, and a plurality of function controls. The source language information 731C may present "Auto-detect", to indicate that the electronic device 100 automatically detects a language of source text when performing translation. The target language information 731D may be used to display a default language or a target language ("Chinese") selected by the user. Content of the source text 731E is the same as that of the text 721 in the selected state in the user interface 720, and includes Chinese text and English text. A display manner of the Chinese text is different from that of the English text. The English text "Second, manage your time and life." is in an emphasized (for example, highlighted) state. The translated text 731F is text that is in the target language (that is, Chinese) and that is obtained by translating the source text 731E: " 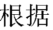 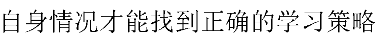 _{∘} (A correct learning strategy can be found according to your own situation.) 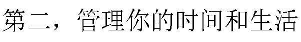 _{∘} (Second, manage your time and life.)", where " 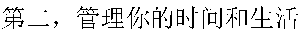 _{∘} (Second, manage your time and life.)" is a translation result of English text in the source text 731E. The translation result is in an emphasized (for example, highlighted) state. The plurality of function controls include, for example, a control 731G, a control 731H, a control 731I, and a control 731J. The control 731G is used to copy the translated text 731F. The control 731H is used to copy a translation result (that is, "highlighted translated text") of English text in the translated text 731F. The control 731I is used to share the translated text 731F. The control 731J is used to share the translation result (that is, the "highlighted translated text) of the English text in the translated text 731F.

This is not limited to the foregoing examples. In some other examples, the electronic device 100 may further display the detected language included in the source text. For example, the source language information 511A in the user interface 520 shown in FIG. 5(B) presents "English + German", to indicate that the electronic device 100 detects that the source text displayed in the input box 512 includes content in two languages: English and German.

This is not limited to the foregoing examples. In some other examples, the electronic device 100 may further provide auxiliary interaction functions such as one-click copy, save, and forward for a translation result. Controls used to implement these functions are similar to the copy control 521, the save control 522, and the forward control 523 in the user interface 520 shown in FIG. 5(B). Details are not described again.

This is not limited to the foregoing examples. In some other examples, the electronic device 100 may not display controls used to copy/save/forward content in a language of interest, for example, the copy control 521, the save control 522, and the forward control 523 shown in FIG. 5(B), the control 641H and the control 641J shown in FIG. 6(D), and the control 731H and the control 731J shown in FIG. 7(C). Instead, the electronic device 100 triggers copying/saving/forwarding the content in the language of interest in another manner. For example, when the electronic device 100 detects that a cursor is at a position of an emphasized translation result (briefly referred to as a highlighted text herein) (for example, detects that a touch position of a finger of a user is the position of the highlighted text, or detects that a cursor corresponding to an apparatus such as a mouse or a stylus connected to the electronic device 100 is at the position of the highlighted text), the electronic device 100 may display prompt information. The prompt information is used to prompt the user to copy, save, and/or forward the highlighted text by choosing/selecting the highlighted text. The user may select the highlighted text based on the prompt information. Subsequently, when detecting a user operation for selecting the highlighted text, the electronic device 100 may display the copy control, the save control, and/or the forward control. A specific description is similar to the description of displaying the function bar 722 when the text 721 is selected in FIG. 7(A), FIG. 7(B), and FIG. 7(C).

The translation method in this application is described based on the foregoing embodiments. The method may be applied to the electronic device 100 shown in FIG. 1. The method may be applied to the electronic device 100 shown in FIG. 2. The method may be applied to the electronic device 100 shown in FIG. 3.

FIG. 8 is a schematic flowchart of a translation method according to an embodiment of this application. The method may include but is not limited to the following steps.

S101: An electronic device obtains source text input by a user.

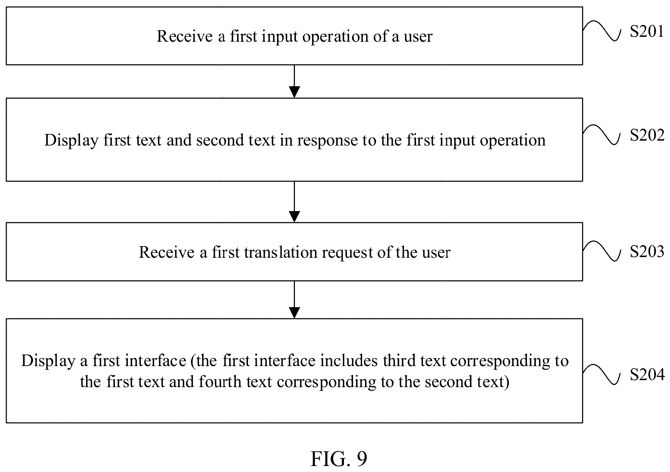

In an implementation, the electronic device may obtain the source text input by the user or the source text selected by the user from text displayed by the electronic device. For a specific example, refer to descriptions of S201 in FIG. 9.

S102: The electronic device determines whether the source text includes content in a plurality of languages.

In an implementation, the electronic device may recognize a language of the source text, to obtain a language detection result. For a specific recognition process, refer to descriptions of the multi-granularity language detection system 210 shown in FIG. 3 and FIG. 4. The electronic device may determine, based on the language detection result, whether the source text includes content in a plurality of languages, that is, determine whether the source text is in mixed languages. When a determining result is that the source text is not in mixed languages, that is, the source text includes content in only one language (which may also be understood as that the source text is in a single language), the electronic device may perform S103. When a determining result is that the source text is in mixed languages, the electronic device may intelligently recognize, based on the language detection result, content in a language that may be of interest to/needed by the user (which may be referred to as a content in a language of interest) in the source text, for example, perform S104 and S107.

S103: The electronic device translates the source text and displays a translation result.

In an implementation, when the source text includes content in only one language, the electronic device may translate the source text by using a translation model corresponding to the language, and obtain output of the translation model, that is, a translation result in a target language. The target language may be preset on the electronic device, or may be determined in response to a user operation, for example, determined in response to a user operation for the target language information 511B in the user interface 510 shown in FIG. 5(A).

S104: The electronic device determines whether the source text includes content in the target language.

In an implementation, the electronic device may determine, based on the obtained language detection result, whether the source text includes content in the target language. When a determining result is that the source text includes the content in the target language, the electronic device may determine that content in at least one language other than the target language in the source text is the content in the language that may be of interest to/needed by the user (that is, the content in the language of interest), and translate the content in the language of interest, for example, perform S105 and S106. When a determining result is that the source text does not include the content in the target language, the electronic device may perform another step of recognizing the content in the language of interest, for example, perform S107.

S105: The electronic device translates content in a non-target language in the source text to obtain text 1.

In an implementation, the source text may include the content in the target language and content in at least one language other than the target language (which may be referred to as the non-target language), and the text 1 may include a translation result of the content in the at least one other language, that is, a translation result of content in a language of interest. In some examples, the content in the non-target language may include content in a plurality of languages. For content in any language in the content in the plurality of languages, the electronic device may translate the content in the language by using a translation model corresponding to the language, and obtain an output translation result. The text 1 includes a translation result of the content in the plurality of languages.

S106: The electronic device displays the text 1 in a first display manner, and displays the content in the target language in the source text in a second display manner.

In an implementation, the electronic device displays the text 1 and the content in the target language in the source text based on an arrangement manner of elements in the source text. A display manner of the text 1 is different from that of the content in the target language in the source text. For example, the text 1 is emphasized (that is, the translation result of the content in the language of interest).

In an implementation, the electronic device may display the source text and a translation result of the source text (including the text 1 and the content in the target language in the source text). A display manner of the content in the non-target language in the source text is the same as that of the text 1. For example, the content in the non-target language is emphasized in the source text, and the text 1 is emphasized in the translation result of the source text.

S107: The electronic device determines whether the source text includes content in a preset language.

In an implementation, the preset language is a minority language classified on the Internet, for example, a language other than Chinese, English, French, Spanish, Russian, and Arabic. This is not limited thereto. The preset language may alternatively be a minority language determined in another classification manner on the Internet. For example, all languages except English are classified as minority languages. This is not limited in this application.

In another implementation, the preset language is selected by the electronic device from an obtained language detection result (including a plurality of languages) according to a preset rule. In some examples, based on a country in which the electronic device is located, a language other than a common language of the country (for example, a common language of China is Chinese) may be selected from the obtained language detection result as the preset language. This is not limited thereto. In some other examples, based on universality of languages, a language with the smallest universality is selected from the obtained language detection result as the preset language. This is not limited in this application.

In an implementation, the electronic device may determine, based on the obtained language detection result, whether the source text includes the content in the preset language. When a determining result is that the source text includes the content in the preset language, the electronic device may determine that the content in the preset language in the source text is the content in the language that may be of interest to/needed by the user (that is, the content in the language of interest), and translate the content in the language of interest, for example, perform S108 and S109. When a determining result is that the source text does not include the content in the preset language, the electronic device may perform S110.

S108: The electronic device translates the content in the preset language in the source text to obtain text 2, and translates content in a language other than the preset language in the source text to obtain text 3.

In an implementation, for content in any language in the source text, the electronic device may translate the content in the language by using a translation model corresponding to the language, obtain an output translation result, and then recombine the obtained translation result of the content in the plurality of languages, that is, perform permutation and combination according to an arrangement manner of elements in the source text, to obtain a translation result (which may be referred to as target text) in a format consistent with a format of the source text. The target text includes a translation result (that is, the text 2) of the content in the preset language and a translation result (collectively referred to as the text 3) of content in at least one language other than the preset language.

S109: The electronic device displays the text 2 in a third display manner, and displays the text 3 in a fourth display manner.

In an implementation, the electronic device may display the target text (that is, the translation result of the source text), and the display manners of the text 2 and the text 3 are different. For example, the text 2 is emphasized.

In an implementation, the electronic device may display the source text and the translation result of the source text (including the text 2 and the text 3). A display manner of the content in the preset language in the source text is the same as that of the text 2. For example, the content in the preset language is emphasized in the source text, and the text 2 is emphasized in the translation result of the source text.

S110: The electronic device translates the source text and displays the translation result.

In an implementation, for content in any language in the source text, the electronic device may translate the content in the language by using a translation model corresponding to the language, obtain an output translation result, and then recombine the obtained translation result of the content in the plurality of languages, that is, perform permutation and combination according to an arrangement manner of elements in the source text, to obtain a translation result in a format consistent with a format of the source text. When displaying the translation result, the electronic device displays the translation result of the content in different languages in a same manner.

In some examples, an application scenario of the method shown in FIG. 8 is the scenario shown in FIG. 5(A) and FIG. 5(B). The source text is the text (He turned around and asked: "Entschuldigen Sie, sprechen Sie Deutsch? (Excuse me, do you speak German?)" but passersby ignored him and walked straight ahead.) displayed in the input box 512 shown in the user interface 520. The language detection result of the source text is English and German. The target language of translation is Chinese. Therefore, when the procedure shown in FIG. 8 is performed, the determining result of S102 is that the source text includes the content in the plurality of languages, and the determining result of S104 is that the source text does not include the content in the target language. In this case, the electronic device performs S107. It is assumed that the preset language is a minority language: German. In this case, the determining result of S107 is that the source text includes the content in the preset language, and the electronic device may recognize the German text ("Entschuldigen Sie, sprechen Sie Deutsch? (Excuse me, do you speak German?)") in the source text as the content in the language of interest. For an example in which the electronic device displays the translation result (that is, the target text) of the source text, refer to the display box 514 shown in the user interface 520. The translation result of the German text (" 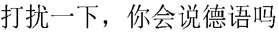 ? (Excuse me, do you speak German?)") (that is, the text 2) is in a highlighted state. The translation result of the English text (that is, the text 3) is not in the highlighted state.

In some examples, an application scenario of the method shown in FIG. 8 is the scenario shown in FIG. 6(A), FIG. 6(B), FIG. 6(C), and FIG. 6(D). The source text is the text 623C ( 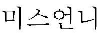 (Miss) 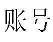 (Account): 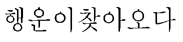 (Luck arrived) 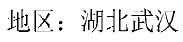 (Region: Wuhan, Hubei) 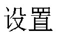 (Set)) shown in the user interface 630. The language detection result of the source text is Chinese and Korean. The target language of translation is Chinese. Therefore, when the procedure shown in FIG. 8 is performed, the determining result of S102 is that the source text includes the content in the plurality of languages, and the determining result of S104 is that the source text includes the content in the target language. In this case, the electronic device performs S105. The electronic device recognizes the Korean text (" 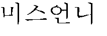 (Miss)" and " 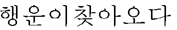 (Luck arrived)") in the source text as the content in the language of interest and translates the Korean text, and does not translate the Chinese text in the source text. For an example in which the electronic device displays the translation result of the source text (that is, the target text), refer to the translated text 641F shown in the user interface 640. The translation result (that is, the text 1) of the Korean text (" 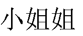 (Miss)" and " 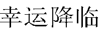 (Luck arrived)") is in a highlighted state, and the Chinese text (that is, the content in the target language in the source text) is not in the highlighted state.

In some examples, an application scenario of the method shown in FIG. 8 is the scenario shown in FIG. 7(A), FIG. 7(B), and FIG. 7(C). A specific description is similar to the description of the foregoing application scenario being the scenario shown in FIG. 6(A), FIG. 6(B), FIG. 6(C), and FIG. 6(D). For details, refer to the foregoing description and the description in FIG. 7(A), FIG. 7(B), and FIG. 7(C).

In the method shown in FIG. 8, when the source text is in mixed languages, the electronic device may intelligently recognize, from the source text based on the language detection result, the content in the language of interest that may be of interest to/needed by the user, for example, the content in the non-target language or content in a minority language. In addition, when displaying the translation result of the source text, the electronic device emphasizes the content in the language of interest, to further mine and use the language detection result, so that the user can quickly obtain a translation result of content in a needed language, thereby implementing a translation search-free function in a "language dimension". This greatly facilitates use of the user.

FIG. 9 is a schematic flowchart of another translation method according to an embodiment of this application. The method may include but is not limited to the following steps.

S201: An electronic device receives a first input operation of a user.

S202: The electronic device displays first text and second text in response to the first input operation.

In an implementation, the electronic device may obtain to-be-translated source text based on the first input operation. The source text includes the first text and the second text.

In some examples, the first input operation includes that the user inputs the source text in an input box in a translation application interface. The electronic device may display the source text in the input box in the translation application interface. For example, in the scenario shown in FIG. 5(A) and FIG. 5(B), the electronic device may first receive the text input in the input box 512 in the user interface 510, and display the user interface 510. The text displayed in the input box 512 in the user interface 510 is the first text and the second text.

In some other examples, the first input operation includes that the user selects text in an instant messaging application interface. For example, in the scenario shown in FIG. 6(A), FIG. 6(B), FIG. 6(C), and FIG. 6(D), the electronic device may first receive a user operation (for example, a two-finger press operation) for the user interface 610, extract a part of text in the user interface 610 in response to the user operation, and display a pop-up box: the display box 623. The extracted text 623C is displayed in the display box 623, and the text 623C is the first text and the second text.

In some other examples, the first input operation includes that the user selects specific text (that is, the source text) in text in a browser application interface. For example, in the scenario shown in FIG. 7(A), FIG. 7(B), and FIG. 7(C), the electronic device may receive a user operation (for example, a touch and hold operation) on a part of the text 713 in the user interface 710, and display the user interface 720 in response to the user operation. The text 721 (that is, the part of text selected by the user) in the text 713 shown in the user interface 720 is in the selected state. The text 721 is the first text and the second text.

S203: The electronic device receives a first translation request of the user.

In an implementation, the first translation request may be used to trigger translation of the source text.

In some examples, the first input operation includes that the user inputs text in an input box in a translation application interface. The electronic device receiving the first translation request includes: The electronic device receives a user operation on a translate control in the translation application interface. For example, in the scenario shown in FIG. 5(A) and FIG. 5(B), the electronic device receives a user operation on the translate control 513 in the user interface 510.

In some other examples, the first input operation includes that the user selects the text in the instant messaging application interface. The electronic device may display the pop-up box in response to the first input operation. The pop-up box includes the first text, the second text, and the translate control. The electronic device receiving the first translation request includes: The electronic device receives the user operation on the translate control in the pop-up box. For example, in the scenario shown in FIG. 6(A), FIG. 6(B), FIG. 6(C), and FIG. 6(D), the electronic device may first receive a user operation on the text 623C in the display box 623 (that is, the pop-up box) shown in the user interface 620, and select the text 623C (that is, the first text and the second text) in response to the user operation. In this case, the electronic device may display the user interface 630, and then receive a user operation on the translate control 623G in the display box 623 shown in the user interface 630.

In some other examples, the first input operation includes that the user selects the specific text in the text in the browser application interface. The electronic device may display a plurality of function controls in response to the first input operation. The electronic device receiving the first translation request includes: The electronic device receives a user operation for a translate control in a plurality of function controls. For example, in the scenario shown in FIG. 7(A), FIG. 7(B), and FIG. 7(C), the electronic device receives a user operation for the translate control 722A in the function bar 722 (including the plurality of function controls) shown in the user interface 720.

In an implementation, the electronic device may first determine, based on the received first translation request, whether the source text includes text in a plurality of languages. For an example of a specific process, refer to the descriptions of S102 in FIG. 8. In FIG. 9, an example in which the source text includes the first text in the first language and the second text in the second language (the first language is different from the second language) is used for description. In specific implementation, the source text may include text in more languages or text in fewer languages.

In an implementation, when the electronic device determines that the source text includes text in a plurality of languages, the electronic device may obtain a word-level language detection result. For a specific obtaining process, refer to the descriptions in FIG. 3 and FIG. 4. The word-level language detection result may include the plurality of languages. The plurality of languages include the first language and the second language. The word-level language detection result may be used by the electronic device to determine a display manner of the translation result of the source text. To be specific, a first interface shown in S204 below is determined based on the word-level language detection result. In some examples, the electronic device may determine the first text in the first language from the text in the plurality of languages according to a preset rule. This may be understood as recognizing the content in the language of interest that may be of interest to/needed by the user. For specific implementation examples, refer to the descriptions of S104 and S107 in FIG. 8. A display manner of the translation result of the content in the language of interest may be different from that of a translation result of other source text. Optionally, a display manner of the content in the language of interest may also be different from that of the other source text.

In an implementation, after determining that the source text includes text in a plurality of languages, the electronic device may separately translate the text in the plurality of languages in the source text by using corresponding translation models, to obtain target text in a third language (that is, a target language). The target text includes third text and fourth text. The third text corresponds to the first text. The third text is obtained by translating the first text. The fourth text corresponds to the second text.

In some examples, when the second language is the same as the third language, the fourth text is the same as the second text. In other words, the electronic device does not translate the second text in the third language in the source text. The first language is different from the third language. For specific descriptions, refer to the descriptions of S104 to S106 in FIG. 8.

In some other examples, when the second language is different from the third language, the fourth text is obtained by translating the second text, and the first language is a preset language. For specific descriptions, refer to the descriptions of S107 to S109 in FIG. 8.

S204: The electronic device displays the first interface (the first interface includes the third text corresponding to the first text and the fourth text corresponding to the second text).

In an implementation, after obtaining the translation result (that is, the target text) of the source text, the electronic device may display the first interface. The first interface includes the third text and the fourth text. A display manner of the third text is different from a display manner of the fourth text. For a specific example, refer to the descriptions of S106 and S109 in FIG. 8. Optionally, the first interface further includes the first text and the second text. A display manner of the first text is the same as the display manner of the third text. A display manner of the second text is the same as the display manner of the fourth text.

In some examples, in the scenario shown in FIG. 5(A) and FIG. 5(B), the text displayed in the input box 512 shown in the user interface 510 is the source text, the third language is Chinese, and the source text includes the German text (that is, the first text in the first language) and the English text (that is, the second text in the second language). In this case, the second language is different from the third language. Therefore, the fourth text is obtained by translating the second text. For the first interface, refer to the user interface 520 shown in FIG. 5(B). The source text is displayed in the input box 512 in the user interface 520. The German text 512A (that is, the first text) is emphasized. Other text (that is, the English text, namely, the second text) is not emphasized. The target text is displayed in the display box 514 in the user interface 520. The translation result 514A (that is, the translation result of the first text, that is, the third text) is emphasized. Other text (that is, the translation result of the second text, namely, the fourth text) is not emphasized.

In some examples, in the scenario shown in FIG. 6(A), FIG. 6(B), FIG. 6(C), and FIG. 6(D), the text 623C shown in the user interface 630 is the source text, the third language is Chinese, and the source text includes the Korean text (that is, the first text in the first language) and the Chinese text (that is, the second text in the second language). In this case, the second language is the same as the third language. Therefore, the fourth text is the same as the second text. For the first interface, refer to the user interface 640 shown in FIG. 6(D). The source text 641E and the translated text 641F (that is, the target text) are displayed in the user interface 640. The Korean text (" 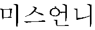 (Miss)" and " 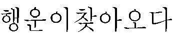 (Luck arrived)") (that is, the first text) in the source text 641E is emphasized. The Chinese text (" 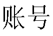 (Account): " and " 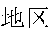 : 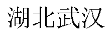 (Region: Wuhan, Hubei) 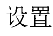 (Set)") (that is, the second text) in the source text 641E is not emphasized. " 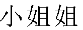 (Miss)" and " 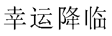 (Luck arrived)" (that is, the translation result of the first text, namely, the third text) in the translated text 641F are emphasized. Other text (that is, the fourth text corresponding to the second text, namely, the second text) in the translated text 641F is not emphasized. The descriptions of the scenario shown in FIG. 7(A), FIG. 7(B), and FIG. 7(C) are similar to the descriptions of the scenario shown in FIG. 6(A), FIG. 6(B), FIG. 6(C), and FIG. 6(D). Details are not described again.

In an implementation, the first interface further includes information about the first language and the second language, and optionally, the third language, so that the user can intuitively obtain the language detection result of the source text and the target language.

In an implementation, the first interface further includes a first control, and the first control is used to implement at least one of the following functions: copying the third text, saving the third text, and forwarding the third text. For specific examples, refer to the copy control 521, the save control 522, and the forward control 523 in the user interface 520 shown in FIG. 5(B), the control 641H and the control 641J shown in FIG. 6(D), and the control 731H and the control 731J shown in FIG. 7(C).

In the method shown in FIG. 9, for the source text including the content in the plurality of languages, the electronic device separately translates the text in the plurality of languages to obtain the target text, that is, can quickly and accurately obtain the translation result corresponding to the source text in the mixed languages. In addition, when the electronic device displays the target text, the translation result of the source text in different languages may be displayed in different display manners. For example, a translation result (that is, the third text) of the recognized content in the language of interest (that is, the first text) is emphasized. The user does not need to compare the source text with the target text element by element, to implement a search-free function in a "language dimension", thereby improving user experience.

The foregoing embodiments are described by using a translation scenario as an example. In some other embodiments, the method may also be applied to a voice broadcasting scenario. A difference lies in that a "translation model" needs to be replaced with a "voice broadcasting model". Any voice broadcasting model is used to obtain a pronunciation of content in a corresponding language. "Display" needs to be replaced with "Play". Specific descriptions are similar. Details are not described.

All or a part of the method provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center that integrates one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A translation method, applied to an electronic device, wherein the method comprises:
receiving a first input operation of a user;
displaying first text and second text in response to the first input operation, wherein the first text is in a first language, the second text is in a second language, and the first language is different from the second language;
receiving a first translation request of the user; and
displaying a first interface, wherein the first interface comprises third text and fourth text, the third text and the fourth text are in a third language, the third language is different from the first language, the third text is obtained by translating the first text, the fourth text corresponds to the second text, and a display manner of the third text is different from a display manner of the fourth text.

2. The method according to claim 1, wherein
when the second language is the same as the third language, the fourth text is the same as the second text; and
when the second language is different from the third language, the fourth text is obtained by translating the second text.

3. The method according to claim 1 or 2, wherein the first interface comprises the first text and the second text, a display manner of the first text is the same as the display manner of the third text, and a display manner of the second text is the same as the display manner of the fourth text.

4. The method according to any one of claims 1 to 3, wherein the first interface comprises information about the first language and the second language.

5. The method according to any one of claims 1 to 4, wherein the first user interface comprises a first control, and the first control is used to implement at least one of the following functions: copying the third text, saving the third text, and forwarding the third text.

6. The method according to any one of claims 1 to 5, wherein receiving the first input operation of the user comprises:
receiving the first input operation of the user on a second interface, wherein the second interface comprises a first instant messaging application interface, and the first input operation comprises selecting text in the first instant messaging application interface.

7. The method according to any one of claims 1 to 5, wherein receiving the first input operation of the user comprises:
receiving the first input operation of the user on a third interface, wherein the third interface comprises a first translation application interface, and the first input operation comprises inputting the first text and the second text in an input box in the first translation application interface.

8. The method according to any one of claims 1 to 5, wherein receiving the first input operation of the user comprises:
receiving the first input operation of the user on a fourth interface, wherein the fourth interface comprises a first browser application interface, the first browser application interface comprises fifth text, and the first input operation comprises selecting the first text and the second text in the fifth text.

9. The method according to any one of claims 1 to 8, wherein the third text in the first interface is in an emphasized state, and the first text corresponding to the third text is determined from the first text in the first language and the second text in the second language according to a preset rule.

10. The method according to any one of claims 1 to 9, wherein the first language is a minority language.

11. The method according to any one of claims 1 to 10, wherein after receiving the first translation request of the user, the method further comprises:
processing the first text and the second text by using a classifier to obtain first information, wherein the first information indicates that the first text and the second text are in mixed languages; and
obtaining a language of each symbol in the first text and the second text by using a tagger, to obtain a word-level language detection result, wherein the word-level language detection result comprises the first language and the second language, and the first interface is displayed based on the word-level language detection result.

12. An electronic device, comprising a transceiver, a processor, and a memory, wherein the memory is configured to store a computer program, and the processor invokes the computer program to perform the method according to any one of claims 1 to 11.

13. A computer storage medium, wherein the computer storage medium stores a computer program; and when the computer program is executed by a processor, the method according to any one of claims 1 to 11 is implemented.
